# EUROPÄISCHE PATENTSCHRIFT

(11) **EP 0 923 468 B1**
(45) Veröffentlichungstag und Bekanntmachung des Hinweises auf die Patenterteilung: **10.12.2003**
(21) Anmeldenummer: 98936218.1
(22) Anmeldetag: 18.06.1998
(51) Int. Cl.: B60S 1/38, B60S 1/40

(54) **VORRICHTUNG ZUM ANSCHLIESSEN EINES WISCHBLATTS AN EINEM WISCHERARM**
DEVICE FOR LINKING A WIPER BLADE TO A WIPER ARM
DISPOSITIF DE LIAISON D'UNE RACLETTE D'ESSUIE-GLACE A UN BRAS DE MONTURE D'ESSUIE-GLACE

(30) Priorität: 11.07.1997 DE 19729862
(43) Veröffentlichungstag der Anmeldung: 23.06.1999
(73) Patentinhaber: ROBERT BOSCH GMBH, 70442 Stuttgart (DE)
(72) Erfinder: KOTLARSKI, Thomas, D-77830 Bühlertal (DE)
(86) Internationale Anmeldenummer: DE9801675
(87) Internationale Veröffentlichungsnummer: WO99002380

(56) Entgegenhaltungen:
- US-A- 2 056 777
- US-A- 3 838 475
- US-A- 3 872 537

## Beschreibung

### Stand der Technik

Bei Wischblättern der im Oberbegriff der Ansprüche 1 und 2 bezeichneten Art soll das Tragelement für das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende Krümmung des unbelasteten Tragelements - also wenn das Wischblatt nicht an der Scheibe anliegt, werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird. Ein solches Wischblatt soll auf einfache Weise unverlierbar an den Wischerarm angeschlossen und von diesem abgenommen werden können.

Die Erfindung geht aus von einer Anschlußvorrichtung nach der Gattung der Ansprüche 1 und 2 1. Bei einer bekannten Anschlußvorrichtung dieser Art (DE-A-23 44 876) ist das Tragelement aus einem Kunststoff gefertigt. Die beiden seitlichen Anschlußzapfen sind dabei direkt an das Tragelement angeformt worden und bestehen deshalb aus demselben Material wie das Tragelement. Im Betrieb des Wischblatts werden an das Tragelement insbesondere hohe Anforderungen hinsichtlich der Elastizität gestellt, weil es die über den Wischerarm auf das Wischblatt wirkende, zur Scheibe gerichtete Anlegekraft möglichst gleichmäßig über die gesamte Wischblattlänge verteilen soll und zwar auch dann, wenn sich die Krümmungsradien der in der Regel sphärisch gekrümmten Scheiben in dem vom Wischblatt zu überstreichenden Scheibenbereich ständig ändern. An die Zapfen werden dagegen hohe Anforderungen an deren Verschleißfestigkeit bei guten Gleiteigenschaften gestellt. Daraus ergibt sich, daß bei der Auslegung des bekannten Wischblatts, bzw. des zu diesem gehörendem Tragelements Kompromisse in Kauf genommen werden müssen, welche einer optimalen Lösung der beiden Forderungen entgegenstehen.

Aus der US-A-3, 838, 475 ist es bekannt, auf ein Wischblatt eine Anschlussvorrichtung aufzubringen, die ein Basisteil mit nach außen ragenden Zapfen aufweist, über die ein bewegliches Teil montiert werden muß. An das so vorbereitete Wischblatt kann ein Wischerarm angeschlossen werden, indem sein flaches Ende in das bewegliche Teil eingeführt und mittels einer Schraube festgeklemmt wird. Hier ist es insbesondere nachteilig, dass für einen Wischblattwechsel ein zusätzliches Werkzeug benötigt wird. Außerdem hängt die Verbindung zwischen Wischerarm und Wischblatt von der Klemmfestigkeit, die durch die Schraube erzielt wird, ab.

### Vorteile der Erfindung

Bei der erfindungsgemäßen Anschlußvorrichtung mit den kennzeichnenden Merkmalen des Anspruchs 1 ist es möglich, das separat vorgefertigte Bauteil aus einem verschleißfesten Material mit guten Gleiteigenschaften herzustellen. Das Tragelement dagegen kann dagegen ohne Nachteile aus einem hinsichtlich der geforderten Elastizität besonders geeigneten Werkstoff hergestellt werden. Nach dem Verbinden des Bauteils mit dem Tragelement ergibt sich ein mit den seitlichen Zapfen versehenes Tragelement, welches allen an dieses gestellten Anforderungen in optimaler Weise gerecht wird. Das Tragelement kann dabei auch mehrteilig ausgeführt sein und bespielsweise zwei oder mehrere parallele Blechstreifen aufweisen.

Ein besonders einfaches Anschließen des Wischblatts an den Wischerarm bei einer gleichzeitig betriebssicheren, dauerhaften und auf einfache Weise wieder lösbare Verbindung wird erreicht, wenn in Weiterbildung der Erfindung die beiden Zapfen mit jeweils zwei einander gegenüberliegenden, innerhalb einer gedachten Ringmantelfläche befindlichen, zur Scheibe ausgerichteten Anflachungen versehen sind und wenn weiter die den Zapfen zugeordneten Ausnehmungen durch randoffene Bohrungen gebildet sind, wobei die Randöffnungen wenigstens annähernd parallel zur Scheibenoberfläche liegen und eine Größe aufweisen, welche auf den Abstand der beiden Anflachungen eines Zapfens abgestimmt ist. Bei dieser Ausgestaltung der Anschlußmittel ergeben sich auch für den Laien logische Montageschritte, die zum Anschließen einer Steck-Drehbewegung und zur Demontage eine Dreh-Zugbewegung erfordern.

Eine besonders kostengünstige Ausbildung und Herstellung des Bauteils ergibt sich, wenn dieses aus einem Kunststoff besteht und die beiden Zapfen an einen Grundkörper des Bauteils angeformt sind.

Eine gute seitliche Führung des Tragelements und damit des Wischblatts am Wischerarm ist gewährleistet, wenn in weiterer Ausgestaltung der Erfindung die randoffenen Bohrungen in den U-Schenkeln eines zumindest partiell im Querschnitt U-förmigen, mit dem Wischerarm fest verbundenen Bauelements angeordnet sind, wenn weiter die U-Basis von der zu wischenden Scheibe abgewandten Bandfläche des Tragelements gegenüberliegt und wenn schließlich die beiden U-Schenkel, die einander gegenüberliegenden Längsseiten des Tragelements übergreifen. Als weiterer Vorteil ergibt sich bei dieser Ausgestaltung eines besonders niedrige Bauhöhe der Anschlußvorrichtung und damit auch der gesamten Wischblatt-Wischerarmanordnung, die den an der zu wischenden Scheibenoberfläche vorhandenen Luftströmungen wenig Angriffsfläche bietet.

Wenn weiter das Bauelement aus einem Metall hergestellt ist, können besonders vorteilhafte Gleitpartner für die Zapfen-Ausnehmungen-Lagerung gewählt werden, weil während der Arbeitsbewegung des Wischblatts eine ständige Relativbewegung zwischen dem Wischblatt und dem Wischerarm stattfindet, die beispielsweise durch die vielen Krümmungsradien aufweisende Scheibe bedingt ist. Durch diese Materialwahl ist auf einfache Weise sichergestellt, daß Abnutzungen an dieser Lagerstelle nur am Wischblatt auftreten, das sowieso öfters gewechselt werden muß, während der Wischerarm geschont ist.

Weiter vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

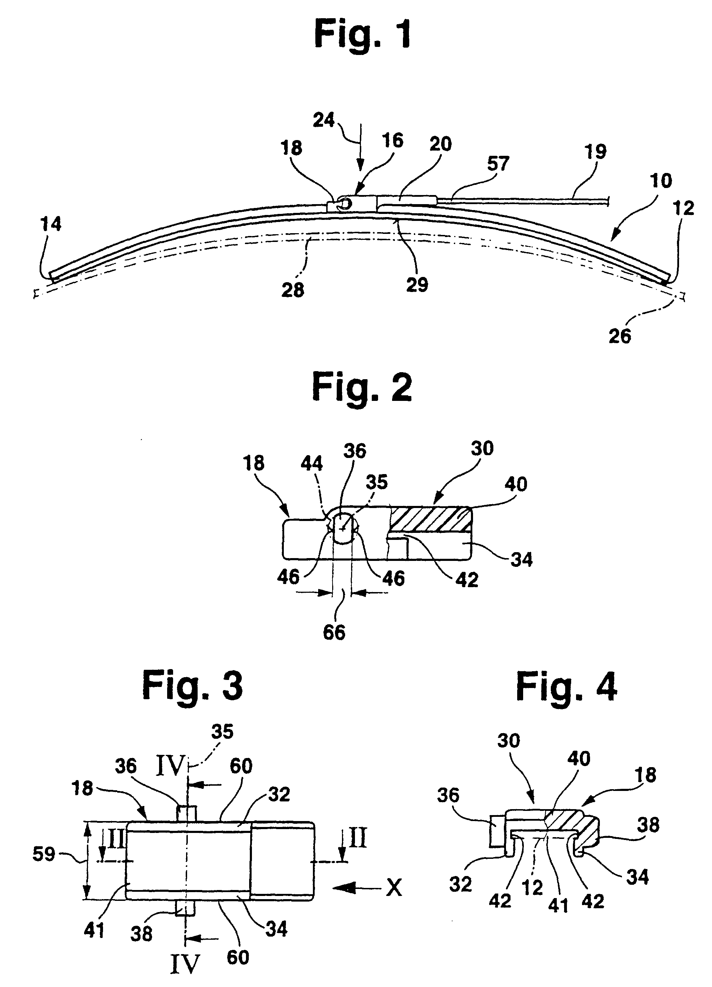

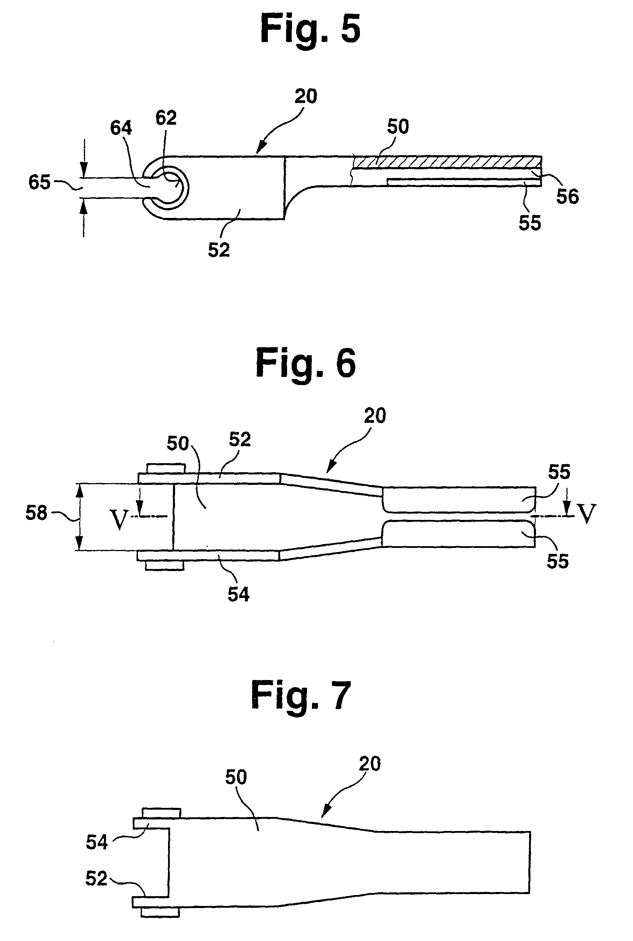

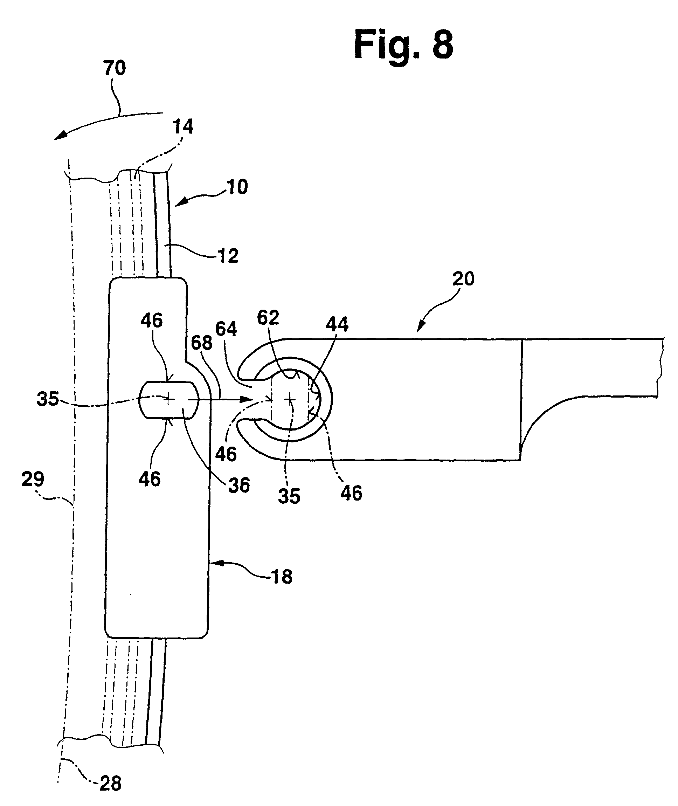

In der Zeichnung zeigen: Figur 1 eine Seitenansicht eines Wischerarms, an dem ein Wischblatt angeschlossen ist, Figur 2 eine teilweise in Richtung der Linie II-II in Figur 3 geschnittene Seitenansicht eines wischblattseitigen Anschluß-Bauteils, in vergrößerter Darstellung, Figur 3 eine Ansicht von unten des Anschluß-Bauteils gemäß Figur 2, Figur 4 eine Ansicht des Anschluß-Bauteils in Richtung des Pfeiles X in Figur 3, entlang der Linie IV-IV in Figur 3 geschnitten, um 90° versetzt gezeichnet, Figur 5 eine teilweise in Richtung der Linie V-V in Figur 6 geschnittene Seitenansicht eines wischerarmseitigen Anschluß-Bauelements in vergrößerter Darstellung, Figur 6 eine Ansicht von unten des Anschluß-Bauelements gemäß Figur 5, Figur 7 eine Draufsicht auf das Anschluß-Bauelement gemäß Figur 5 und Figur 8 die Anordnung des Anschluß-Bauteils gemäß Figur 2 und des Anschluß-Bauelements gemäß Figur 5 vor dem Anschließen des Wischblatts am Wischerarm, in vergrößerter unmaßstäblicher Darstellung.

### Beschreibung des Ausführungsbeispiels

Ein in Figur 1 dargestelltes Wischblatt 10 weist ein bandartig langgestrecktes, federelastisches Tragelement 12 auf, an dessen Unterseite eine langgestreckte, gummielastische Wischleiste 14 längsachsenparallel befestigt ist. An der Oberseite des auch als Federschiene zu bezeichnenden Tragelements ist in dessen Mittelabschnitt ein zur Anschlußvorrichtung 16 gehörendes Anschlußbauteil 18 angeordnet, mit deren Hilfe das Wischblatt 10 mit einem angetriebenen Wischerarm 19 lösbar verbunden werden kann. An dem freien Ende 57 des Wischerarms 19 ist ein als Gegenanschlußmittel ausgebildetes Anschluß-Bauelement 20 angeordnet, welches zur Anschlußvorrichtung 16 gehört. Der Wischerarm 19 ist in Richtung des Pfeiles 24 zur zu wischenden Scheibe 26 - beispielsweise die Windschutzscheibe eines Kraftfahrzeugs - belastet, deren zu wischende Oberfläche in Figur 1 durch eine strichpunktierte Linie 28 angedeutet ist. Da die strichpunktierte Linie 28 die stärkste Krümmung der Scheibenoberfläche darstellen soll, ist klar ersichtlich, daß die Krümmung des mit seinen beiden Enden an der Scheibe 26 anliegenden Wischblatts 10 stärker ist als die maximale Scheibenkrümmung. Unter dem Anpreßdruck (Pfeil 24) legt sich das Wischblatt mit seiner Wischlippe 29 an der Scheibenoberfläche 28 an. Dabei baut sich im federelastischen Tragelement 12 ein Spannung auf, welche für eine ordnungsgemäße Anlage der Wischleiste bzw. der Wischlippe 29 über deren gesamte Länge an der Scheibe 26 und für gleichmäßige Verteilung des Anpreßdrucks (Pfeil 24) sorgt. Im folgenden soll die Verbindung zwischen dem Tragelement 12 und dem Wischerarm 19 anhand der Figuren 2 bis 8 näher erläutert werden.

Zu der erwähnten Anschlußvorrichtung 16 gehört neben dem schon erwähnten, wischerarmseitigen Bauelement 20 noch ein wischblattseitiges, zum Tragelement 12 gehörendes Bauteil 18, dessen Aufbau aus den Figuren 2 bis 4 ersichtlich ist. Das wischblattseitige, aus Kunststoff hergestellte Bauteil 18 hat einen im wesentlichen U-förmigen Grundkörper 30 (Figur 4), an dessen beiden U-Schenkeln 32 und 34 voneinander weggerichtete Zapfen 36 und 38 angeformt sind. Die beiden Zapfen 36 und 38 weisen eine gemeinsame Längsachse 35 auf. Diese gemeinsame Längsachse 35 quert somit den von der U-Basis 40 und den beiden U-Schenkeln 32 und 34 begrenzten Kanal 41, der zur Aufnahme des Tragelements 12 dient. Sie liegt im wesentlichen in einer zur Scheibe 26 parallelen Ebene. Um diese Achse kann das Wischblatt 10 eine Relativbewegung zum Wischerarm 19 ausführen.

In Figur 4 ist das Tragelement 12 strichpunktiert eingezeichnet. Dort ist auch erkennbar, daß das Tragelement 12 mit seinen beiden einander gegenüberliegenden Längskanten in Nuten 42 eintaucht, welche einander gegenüberliegend, in den U-Schenkeln 32 und 34 nahe der U-Basis 40 angeordnet sind. Diese Ausgestaltung sichert einen dauerhaften Sitz des Bauteils 18 am Tragelement 12, dessen Längskanten zu diesem Zweck beispielsweise aufgerauht oder mit krallenartigen Zähnen versehen sein können. Weiter ist insbesondere aus Figur 2 ersichtlich, daß die beiden Zapfen 36, 38 mit jeweils zwei einander gegenüberliegenden, innerhalb einer gedachten Ringmantelfläche 44 (Figur 2) befindlichen, zur Scheibe 26 ausgerichtete Anflachungen 46 versehen ist, die bezüglich der gemeinsamen Zapfenlängsachse 35 einander gegenüberliegen.

Das Bauteil 18 ist aus einem Kunststoff hergestellt, dessen Eigenschaften den an das Bauteil 18 gestellten Forderungen gerecht wird. Insbesondere soll er gute Gleiteigenschaften und eine gegen Abrieb hohe Widerstandsfähigkeit aufweisen. Die Befestigung des Bauteils 18 am Tragelement 12 (siehe dazu auch Figur 8) kann beispielsweise dadurch erreicht, daß das vorgefertigte Bauteil 18 durch Auslenken seiner beiden U-Schenkel 32 und 34 auf das Tragelement aufgesetzt wird. Die zurückfedernden U-Schenkel 32 und 34 verbeißen sich bei entsprechender Dimensionierung in den Rauhigkeiten der Tragelementlängskanten und halten das Bauteil 18 sicher in seiner vorbestimmten Position. Es ist jedoch auch denkbar, daß das Bauteil an das Tragelement 12 angeformt, d.h. angespritzt, angeklebt oder aufgerastet werden kann.

Das wischerarmseitige, zum Wischerarm 19 gehörende Bauelement 20 wird im folgenden anhand der Figuren 5 bis 7 erläutert. Es ist beim Ausführungsbeispiel aus einem Metall hergestellt. Es hat einen U-förmigen Querschnitt und somit eine U-Basis 50 und zwei an dieser angeordnete U-Schenkel 52, 54. An dem einen Endes des Bauelements 20 sind die U-Schenkel 52 und 54 mit gegeneinander gerichteten Lappen 55 versehen, so daß sich ein fast rundum geschlossener Sicherungs- oder Einsteckkanal 56 für das Wischerarmende 57 ergibt (Figuren 1 und 5). Die Verbindung zwischen dem Wischerarmende 57 und dem Bauelement 20 kann durch Klemmen, Kleben, Schweißen, Rasten oder dgl. erreicht werden. Die beiden U-Schenkel 52 und 54 weisen einen Abstand 58 voneinander auf, der so auf die Breite 59 des Bauteils 18 abgestimmt ist, daß die beiden U-Schenkel 52 und 54 des Bauelements 20 die beiden die Zapfen 36 und 38 tragenden Längsseiten 60 des Bauteils 18 passend, d.h. möglichst spiellos übergreifen. Damit das Bauelement 20 mit dem Bauteil 18 gelenkig aber unverlierbar verbunden werden kann, sind in den U-Schenkeln 52 und 54 des Bauelements 20 jeweils eine Bohrung 62 angeordnet, welche über eine schlitzartige Öffnung 64 randoffen ist. Diese Öffnungsschlitze 64 liegen im wesentlichen parallel zur Scheibenoberfläche 28. Die Breite 65 des Schlitzes 64 ist so auf den Abstand 66 der beiden Anflachungen 46 an den Zapfen 36 und 38 abgestimmt, daß die Zapfen über die beiden ihnen jeweils zugeordneten Öffnungen 64 in die Bohrungen 62 eingeführt werden können, wenn die Anflachungen auf die Schlitzerstreckungen ausgerichtet sind. Diese Anordnung, welche auch die Montageposition zeigt, ist in Figur 8 dargestellt.

Die Arbeitsschritte zum Anschließen des Wischblatts 10 an das freie Ende 57 des Wischerarm 19 soll anhand der Figur 8 näher erläutert werden. Dort sind das Tragelement 12 und das mit diesem verbundene Bauteil 18 mit ausgezogenen Linien dargestellt, während die Wischleiste 14 und die zu wischende Oberfläche 28 der Scheibe 26 mit strichpunktierten Linien gezeichnet sind. Abweichend von der Realität zeigt Figur 8 das nicht angeschlossene Wischblatt 10 mit an der Scheibenoberfläche 28 anliegender Wischlippe 29. Dadurch soll lediglich die Position des Wischblatts auf der Scheibe gezeigt werden, wenn sich dieses in seiner Betriebsposition befindet. Zum Anschließen des Wischblatts 10 an den mit dem Bauelement 20 versehenen Wischerarm 19 wird das Wischblatt in eine Position gebracht, in welcher die Anflachungen 46 der-Zapfen 36, 38 sich in Verlängerung der Schlitzöffnung 64 befindet. Danach werden die beiden Zapfen 36, 38 in ihre Bohrungen 62 eingebracht, indem das Wischblatt in Richtung des Pfeiles 68 zum Bauelement 20 bewegt wird. Wenn sich die beiden Zapfen 36 und 38 vollständig in ihren Bohrungen 62 befinden, wird das Wischblatt 10 in Richtung des Pfeiles 70 gedreht, bis sich die Anflachungen 46 in die in Figur 8 strichpunktiert dargestellte Stellung gelangen, in welcher sie zur Scheibe 26 ausgerichtet sind. Figur 8 zeigt deutlich, daß sich die Anflachungen 46 innerhalb einer gedachten Mantelfläche 44 befinden, die in Figur 8 durch die Wand der Bohrungen 62 dargestellt ist. Weiter ist klar ersichtlich, daß in dieser, strichpunktiert dargestellten Betriebsposition der Anschlußvorrichtung ein Entfernen des Wischblatts 10 vom Wischerarm 19 nicht mehr möglich ist. Da das Wischblatt 10 während des Betriebs an der zu wischenden Scheibe 26 anliegt, kann das Wischblatt nicht unbeabsichtigt entgegen dem Richtungspfeil 70 verschwenkt werden, so daß ein Lösen der Anschlußverbindung möglich wäre. Es ergibt sich somit ein zuverlässiger Steck-Drehverschluß, der auf einfache Weise auch wieder gelöst werden kann, indem das von der Scheibe abgehobene Wischblatt 10 entgegen der Richtung des Pfeiles 70 um etwa 90° geschwenkt wird, bis ein Herausführen der Zapfen 46 durch die Öffnungen 64 der Bohrungen 62 möglich ist. Zum Lösen der Verbindung ergibt sich somit eine logische Dreh-Ziehbewegung.

Die Anordnung der Anschluß-Gelenkzapfen 36, 38 an einem separaten, mit dem Tragelement 12 verbundenen Bauteil 18 eröffnet die Möglichkeit sowohl für das Tragelement als auch die Gelenkzapfen eine optimale, auf die jeweiligen Forderungen abgestimmte Materialwahl zu treffen.

## Patentansprüche

1. Vorrichtung zum Anschließen eines Wischblatts (10) für Scheiben von Kraftfahrzeugen an einen, am Kraftfahrzeug geführten, angetriebenen Wischerarm (19), wobei das Wischblatt ein bandartig langgestrecktes, federelastisches Tragelement (12) für eine langgestreckte, gummielastische längsachsenparallel am Tragelement (12) angeordnete, an der Scheibe (26) anlegbare Wischleiste (14) aufweist, an dessen beiden Längsseiten als wischblattseitige Anschlussmittel je ein Zapfen (36, 38) ragt, die gemeinsame Längsachse (35) der beiden Zapfen (36, 38) quer zur Tragelementlängsachse und in einer zur Scheibe parallelen Ebene liegt und jeder Zapfen (36, 38) in eine ihm zugeordnete Ausnehmung (62) des Wischerarmes (19) greift, wobei die Zapfen (36, 38) an einem separaten, mit dem Tragelement (12) fest verbundenen Bauteil (18) angeordnet sind, **dadurch gekennzeichnet, dass** das Tragelement zwei einander gegenüberliegende Längskanten aufweist, mit denen es in Nuten (42) des Bauteils (18) eintaucht.

2. Vorrichtung zum Anschließen eines Wischblatts (10) für Scheiben von Kraftfahrzeugen an einen, am Kraftfahrzeug geführten, angetriebenen Wischerarm (19), wobei das Wischblatt ein bandartig langgestrecktes, federelastisches Tragelement (12) für eine langgestreckte, gummielastische längsachsenparallel am Tragelement (12) angeordnete, an der Scheibe (26) anlegbare Wischleiste (14) aufweist, an dessen beiden Längsseiten als wischblattseitige Anschlussmittel je ein Zapfen (36, 38) ragt, die gemeinsame Längsachse (35) der beiden Zapfen (36, 38) quer zur Tragelementlängsachse und in einer zur Scheibe parallelen Ebene liegt und jeder Zapfen (36, 38) in eine ihm zugeordnete Ausnehmung (62) des Wischerarmes (19) greift, wobei die Zapfen (36, 38) an einem separaten, mit dem Tragelement (12) fest verbundenen Bauteil (18) angeordnet sind, **dadurch gekennzeichnet, dass** zum Wischerarm ein Bauelement (20) gehört, an dem die Ausnehmungen (62) angeordnet sind und dass die Ausnehmungen (62) randoffene, schlitzartige Öffnungen (64) aufweisen, damit die Zapfen (36, 38) über die beiden ihnen jeweils zugeordneten Öffnungen (64) in die Ausnehmungen ( 62) eingeführt werden können.

3. Vorrichtung nach einem der Ansprüche 1 oder 2, **dadurch gekennzeichnet, dass** die beiden Zapfen (36, 38) mit jeweils zwei einander gegenüberliegenden, innerhalb einer gedachten Ringmantelfläche (44) befindlichen, zur Scheibe ausgerichteten Anflachungen (46) versehen sind und dass die den Zapfen (36, 38) zugeordneten Ausnehmungen (62) durch randoffene Bohrungen gebildet sind, wobei die Randöffnungen (64) wenigstens annähernd parallel zur Scheibenoberfläche liegen und eine Größe aufweisen, welche auf den Abstand (66) der beiden Anflachungen (46) eines Zapfens (36 bzw. 38) abgestimmt ist.

4. Vorrichtung nach einem der Ansprüche 1 bis 3, **dadurch gekennzeichnet, dass** das Bauteil (18) aus einem Kunststoff besteht und die beiden Zapfen (36, 38) an einen Grundkörper (30) des Bauteils (18) angeformt sind.

5. Vorrichtung nach einem der Ansprüche 1 bis 4, **dadurch gekennzeichnet, dass** die randoffenen Bohrungen (62) in den U-Schenkeln (52, 54) eines zumindest partiell im Querschnitt U-förmigen, mit dem Wischerarm (19) fest verbundenen Bauelements (20) angeordnet sind, dass die U-Basis (50) der von der zu wischenden Scheibe (26) abgewandten Bandfläche gegenüberliegt und dass die beiden U-Schenkel (52, 54) die einander gegenüberliegenden Längsseiten des Tragelements (12) übergreifen.

6. Vorrichtung nach Anspruch 5, **dadurch gekennzeichnet, dass** das Bauelement (20) aus einem Metall hergestellt ist.

## Claims

1. Device for connecting a wiper blade (10) for windows of motor vehicles to a driven wiper arm (19) guided on the motor vehicle, the wiper blade having a supporting element (12), which is resilient and elongate in the manner of a band, for an elongate, elastomeric wiper strip (14) which can be placed against the window (26) and is arranged parallel to the longitudinal axis on the supporting element (12), on the two longitudinal sides of which supporting element (12) in each case one pin (36, 38) projects as connecting means on the wiper-blade side, the common longitudinal axis (35) of the two pins (36, 38) lying transversely with respect to the longitudinal axis of the supporting element and in a plane parallel to the window, and each pin (36, 38) engaging in a recess (62), assigned to it, in the wiper arm (19), the pins (36, 38) being arranged on a separate component (18) which is fixedly connected to the supporting element (12), **characterized in that** the supporting element has two mutually opposite longitudinal edges with which it penetrates into grooves (42) in the component (18).

2. Device for connecting a wiper blade (10) for windows of motor vehicles to a driven wiper arm (19) guided on the motor vehicle, the wiper blade having a supporting element (12), which is resilient and elongate in the manner of a band, for an elongate, elastomeric wiper strip (14) which can be placed against the window (26) and is arranged parallel to the longitudinal axis on the supporting element (12), on the two longitudinal sides of which supporting element (12) in each case one pin (36, 38) projects as connecting means on the wiper-blade side, the common longitudinal axis (35) of the two pins (36, 38) lying transversely with respect to the longitudinal axis of the supporting element and in a plane parallel to the window, and each pin (36, 38) engaging in a recess (62), assigned to it, in the wiper arm (19), the pins (36, 38) being arranged on a separate component (18) which is fixedly connected to the supporting element (12), **characterized in that** the wiper arm comprises a component (20) on which the recesses (62) are arranged, and **in that** the recesses (62) have slot-like openings (64) which are open at the edges, so that the pins (36, 38) can be inserted into the recesses (62) via the two openings (64) respectively assigned to them.

3. Device according to either of Claims 1 or 2, **characterized in that** the two pins (36, 38) are each provided with two mutually opposite flattened portions (46) which are located inside an imaginary ring outer surface (44) and are oriented towards the window, and **in that** the recesses (62), which are assigned to the pins (36, 38), are formed by bores which are open at the edges, the edge openings (64) lying at least approximately parallel to the window surface and being of a size which is matched to the distance (66) between the two flattened portions (46) of one pin (36 or 38).

4. Device according to one of Claims 1 to 3, **characterized in that** the component (18) is composed of a plastic and the two pins (36, 38) are formed integrally on a base body (30) of the component (18).

5. Device according to one of Claims 1 to 4, **characterized in that** the bores (62) which are open at the edges are arranged in the U limbs (52, 54) of a component (20) which is fixedly connected to the wiper arm (19) and is at least partially U-shaped in cross section, **in that** the base of the U (50) lies opposite the band surface facing away from the window (26) to be wiped, and **in that** the two U limbs (52, 54) engage over the mutually opposite longitudinal sides of the supporting element (12).

6. Device according to Claim 5, **characterized in that** the component (20) is manufactured from a metal.

## Revendications

1. Dispositif de liaison d'une raclette d'essuie-glace (10) pour des vitres de véhicules avec un bras de monture d'essuie-glace (19) entraîné et guidé sur le véhicule, cette raclette d'essuie-glace présentant un élément support (12) allongé en forme de bande, déformable, puis une baguette d'essuie-glace (14) allongée, pouvant être disposée sur la vitre (26), de manière élastique parallèlement à l'axe longitudinal de l'élément support (12), et sur les deux côtés longitudinaux de laquelle dépasse un tourillon (36, 38) moyen de liaison du côté de la raclette d'essuie-glace, l'axe longitudinal (35) commun aux deux tourillons (36, 38) étant transversal à l'axe longitudinal de l'élément support et situé dans un niveau parallèle à la vitre, chaque tourillon (36, 38) s'engageant dans un évidement (62) du bras de monture d'essuie-glace (19) qui lui est associé, les tourillons (36, 38) étant disposés sur un élément constitutif (18) séparé, raccordé de manière fixe à l'élément support (12),
**caractérisé en ce que**
l'élément support présente deux arêtes longitudinales opposées l'une à l'autre, par lesquelles il plonge dans les rainures (42) de l'élément constitutif (18).

2. Dispositif de liaison d'une raclette d'essuie-glace (10) pour des vitres de véhicules avec un bras de monture d'essuie-glace (19) entraîné et guidé sur le véhicule, cette raclette d'essuie-glace présentant un élément support (12) allongé en forme de bande, déformable, puis une baguette d'essuie-glace (14) allongée, pouvant être disposée sur la vitre (26), de manière élastique parallèlement à l'axe longitudinal de l'élément support (12), et sur les deux côtés longitudinaux de laquelle dépasse un tourillon (36, 38) moyen de liaison du côté de la raclette d'essuie-glace, l'axe longitudinal (35) commun aux deux tourillons (36, 38) étant transversal à l'axe longitudinal de l'élément support et situé dans un niveau parallèle à la vitre, chaque tourillon (36, 38) s'engageant dans un évidement (62) du bras de monture d'essuie-glace (19) qui lui est associé, les tourillons (36, 38) étant disposés sur un élément constitutif (18) séparé, raccordé de manière fixe à l'élément support (12),
**caractérisé en ce qu'**
- un élément de construction (20) appartient au bras de monture d'essuie-glace, élément sur lequel sont disposés des évidements (62), et
- les évidements (62) présentent des ouvertures (64) ouvertes sur le bord, en forme de fentes, afin que les tourillons (36, 38) puissent être insérés dans ces évidements par les deux ouvertures (64) qui leur sont respectivement associées.

3. Dispositif selon l'une quelconque des revendications 1 ou 2,
**caractérisé en ce que**
- les deux tourillons (36, 38) sont munis respectivement de deux méplats (46) opposés l'un à l'autre, à l'intérieur d'une surface latérale annulaire (44) imaginaire, et orientés vers la vitre, et
- les évidements (62) associés aux tourillons (36, 38) sont formés par des alésages ouverts sur les bords, ces ouvertures (64) étant situées au moins presque parallèlement à la surface des vitres et présentant une taille définie par l'écart (66) des deux méplats (46) d'un tourillon (36 ou 38).

4. Dispositif selon l'une quelconque des revendications 1 à 3,
**caractérisé en ce que**
l'élément constitutif (18) est en matériau plastique et les deux tourillons (36, 38) sont formés sur un corps de base (30) de l'élément constitutif (18).

5. Dispositif selon l'une quelconque des revendications 1 à 4,
**caractérisé en ce que**
- les alésages (62) ouverts sur le bord sont disposés dans les montants en U (52, 54) d'un élément de construction (20), au moins partiellement à section en forme de U, raccordé de manière fixe au bras d'essuie-glace (19),
- la base en U (50) est opposée à la surface de bande détournée de la vitre à essuyer (26), et
- les deux montants en U (52, 54) chevauchent les côtés longitudinaux de l'élément porteur (12) opposés l'un à l'autre.

6. Dispositif selon la revendication 5,
**caractérisé en ce que**
l'élément de construction (20) est fabriqué en métal.
